# EUROPEAN PATENT SPECIFICATION

(11) **EP 1 819 547 B1**
(45) Date of publication and mention of the grant of the patent: **01.07.2009**
(21) Application number: 05789210.1
(22) Date of filing: 20.09.2005
(51) Int. Cl.: B60P 3/08, B60P 1/02, B66F 7/02

(54) **FLOATING VEHICLE SUPPORT DECK**
SCHWIMENDE PLATFORM ZUR AUFNAHME VON FAHRZEUGEN
PONT FLOTTANT DE SUPPORT DE VÉHICULE

(30) Priority: 21.09.2004 GB 0420943; 21.07.2005 GB 0514975
(43) Date of publication of application: 22.08.2007
(73) Proprietor: Clive-Smith, Martin, Leek Wootton, Warwickshire CV35 7QX (GB)
(72) Inventor: Clive-Smith, Martin, Leek Wootton, Warwickshire CV35 7QX (GB)
(74) Representative: Tillbrook, Christopher John
(86) International application number: PCT/GB2005/003626
(87) International publication number: WO 2006/032871

(56) References cited:
- EP-A- 0 904 979
- WO-A-20/04078632
- US-A- 3 043 454

## Description

This invention relates to a free-flocoting suspendded deck arrangement according to the preambule of claim 1

Such an arrangement is known from WO 2004/078632.

A vehicle deck, carriage frame or cradle is suspended either...
- through intermediate, inset support posts, frame or gantry - in turn tied to existing container structure or hard points, such as at floor or roof rails; or
- directly from existing (locally reinforced) cargo lashing points - if the existing structure has sufficient strength and rigidity.

This is a development of the Applicant's adjustable vehicle deck disclosed in WO 02/28748 {PCT/GB01/04413}. Demountable drive motors for deck positional adjustment are also explored in the Applicant's WO 2004/78632.

Those aside, there have been many attempts at containerised vehicle mounting, but these have generally proved cumbersome, inflexible and cost-ineffective - and so a deterrent to widespread adoption. The Applicant has sought a minimalist approach to construction, installation and use.

### Statement of Invention

From operational experience, the Applicants have found that all-round cable suspension helps continual positional adjustment of a vehicle frame or carriage within a container during deck elevation and descent.

In a particular construction a free- floating suspended deck arrangement comprises a platform deck, an array of flexible suspension elements, such as cables, located at or juxtaposed with corners of a rectangular deck or at apices of a polygonal deck, and in which passive deck and active load weight is carried, but the deck is otherwise free to move laterally and longitudinally.

The deck may feature as part of a self-contained conversion module, installable and removable at will. Deck frames could be demountable for part dismantled, or full elevation to under-roof headspace allows general cargo disposition underneath.

A flexible suspension, such as a cable, wire, band, strip or chain links allows compact wind-up or reeling-in. Suspension is conveniently from cables running around pulleys with cable end terminations at roof level. This allows closer, more precisely controlled, frame and vehicle position movement, for internesting and stacking. Minimising load damage risk is important for precious and vulnerable cargo, such as vehicles.

Deck suspension (at opposite frame ends) allows orientation, inclination, or level adjustment, for (inclined ramp) (un)loading and internesting with other vehicle frames. Cables are conveniently driven by demountable manual or power (electric motor) winches. Alternatively, these could be accommodated in the headspace.

### Deck Support

The container structure can be supplemented with internal support posts, frame or gantry - even just (lateral) side posts. A frame can be braced to a container floor, side walls or inset side posts, through adjustable bracing struts.

Frame support posts sit within a container profile, with a series of apertures for bracing wires or chains. For non-intrusive installation, profiled deck support posts, could be inset within complementary recesses in corrugated container side wall profiles.

Other operational considerations are deck frame demountability and/or collapsibility.

Demountability allows wholesale removal or relocation of a frame. Collapsibility facilitates stacking of (collapsed) frames within a container (say, grouped at one end), to free load capacity for conventional general (mixed) cargo. For compact empty storage, a frame desirably collapse folds - say by retracting to roof level.

### 'Free' (Unconstrained) Underslung Deck

A 'free' - that is unconstrained - such as by lateral guides or runners - (under)slung deck or rack is envisaged for carrying a vehicle within an otherwise standard freight container. That said, dedicated container formats might be envisaged if return load traffic is justified. The deck is free of constraint orthogonal to a support direction. In practice, that means freedom in the plane of the deck and at intermediate planes between the deck plane and suspension plane(s).

A deck is thus free to float longitudinally or transversely at any height or tilt setting. This contrasts with conventional, highly constrained, deck lifts, such as US 3,023,711 Rolfe or US 3,043,454 Butler.

This allows (fine) controlled positional adjustment by exertion of modest operator manual force. Deck and load weight are carried through cable suspension, which itself does not constrain lateral movement, at least with generally vertical cable runs.

That said, cable inclination can bias deck movement. Such cable bias can be used selectively in deck tilt adjustment to introduce modest positional creep, say to keep a vehicle load at a desired load station within a container footprint or span.

Suspension cables are set generally at, or closely adjacent, deck corners. Cable disposition is determined by relative positions of opposite ends. For lower deck dispositions - and indeed overall for level deck raising and lowering - cables sit generally upright, but cable stance changes to reflect deck end elevation and tilt.

In practice, a modest outward cable lean, cant or splay is contrived from lower ends at deck capture to upper ends at overhead support points. This creates a trapezoidal cable geometry, which helps stabilise or dampen deck sway - through counter-action of opposed suspension ties.

Any deck sway tendency reduces with deck elevation, as suspension cables foreshorten. In fact this happens as only one deck is elevated over the other. The shorter cable tends to dictate (deck longitudinal position) over the longer cable, or rather the mutual accommodation favours the shorter cable, so the deck moves towards the shorter cable.

Generally, a deck is left free to settle to a longitudinal inclination (tilt) or level determined by relative payed out lengths of end cable pairs. Lateral deck sway tolerated, but ultimately inhibited or constrained by selective length setting and tension adjustment of opposed end restraint chains, secured with demountable shackle or winch to support posts.

Cable upper tie points are releasable spigot and keyhole slot interconnections set at upper ends of lateral support posts. Those posts are either inset into side wall recesses, such as arise with a corrugated stiffener profile, or inset somewhat alongside a container wall. A cable end termination could be a pinch compression sleeve, which gives a larger mass for end tie location.

Cable lift at one deck end, tends to create cable tilt downward towards the lower deck end - with attendant longitudinal bias towards the shorter end. This bias can generate progressive controlled deck shift.

Overall deck elevation is independent of tilt or inclination. Either or both elevation and tilt are adjustable independently by selective drive motor engagement with a respective dedicated drive transfer coupling.

### Cluster- Headspace Stowage

Deck frames for vehicle carriage are grouped or clustered for efficient packing, particularly for vehicle load outlines of complex curvilinear form. It is convenient to allocate one frame per vehicle, but in principle multiple - say intercoupled - frames could be employed per vehicle. Similarly, different vehicles could share frames - say opposed ends of a common frame.

Retracted, collapsed-fold frames can be stowed within an otherwise redundant internal container headspace marginally underlying a container roof. This headspace is clear of end access (un)loading height, allowing alternative floorspace usage for general cargo.

### Restraint

Flexible restraint ties, such as chains, could be deployed at opposite deck ends to curtail or inhibit deck lateral or longitudinal float when the deck is at/or approaching a fully elevated condition.

Individual restraint chains lie inclined to deck and container fore and aft axes - and by setting in opposed pairs constrain deck mobility. They can be deployed as an ancillary or secondary backup - in case of failure of a primary cable system.

Selective tensioning of transverse restraint trains can be used to effect final positioning of a frame already set at a prescribed inclination by opposed support cable adjustment - but which in itself might not fully inhibit or control frame swing.

Fore and aft or longitudinal frame positional adjustment can be effected by selective tensioning of restraint chains. Restraint chains are provided with latching to keyhole apertures in support posts.

A (manual) ratchet winch can be fitted between restraint chain and support post to adjust chain tension. Such a winch can be fitted to a selected aperture in a side post. With a waisted differential or keyhole profile aperture, a winch knuckle can be demountably fitted and inhibited from inadvertent rotation.

A combination of opposed bracing wires or cables allows support both vertically and horizontally (longitudinally and transversely). A particular example would be a trapezoidal cable run or array.

### Enshrouded Drive - Embedded Drive Transfer

Screw pillar drive transfer to cable transfer pulleys is selectively operable for progressive cable tensioning (retraction) or release (relaxation).

For health and safety considerations, concealment and operator protection from hazardous motion transfer drives, such as screw pillars, is also desirable. To that end, enshrouding drive transfer in hollow frame members, free of inadvertent operator contact, is envisaged.

Cable drive transfer is conveniently 'embedded' or integrated within hollow deck frame members. Such an internalised and concealed mechanism shields moving and lubricated components from contamination. It also protects operating personnel limbs from entrapment. Access for maintenance and repair is restricted, but this is not an issue in practice, as an entire deck module is readily removed for dismantling and substituted by a fresh deck.

Essentially a threaded shaft runs the entire length of a hollow deck frame. A runner (itself inhibited from rotation) traverses the shaft as the shaft is rotated by a drive coupling at one emergent end. A cable end is secured to the runner, such as by a head in slot location of cable end sleeve or collar termination.

The shaft runs in bearings set at opposite deck beam ends, and is braced against whip or flex under high speed rotation, by a slide runner upon diametrically opposed tubes set alongside the screw shaft. These tubes are mounted in end plates fitted at opposite ends of a longitudinal deck beam. Anti-rotational bracing is by interfit of rectangular end plate and slide profiles with beam internal cross-section.

Lubrication of threaded interaction between screw shaft and runner is by a permanent high-performance grease - applied upon initial assembly. An optional internal lubricant blade wiper or spreader could be fitted to capture any (grease) displaced by runner and shaft interaction and to re-apply it in the path of movement, so it is re-entrained.

Loading and running dynamics may create a screw drive transfer noise, such as screech - which may arise from rotational vibrational modes upon screw flex and runner or bearing interaction. This noise can be suppressed, if not altogether extinguished by lubrication. Alternatively, albeit at higher cost, sophisticated ball screw drives could be employed for high speed and loading.

Upon pre-assembly an individual cable is secured to a coupling runner by a ferrule sleeve end termination abutment inserted into an aperture in a carrier yoke arm of a runner. The internal sub-assembly can then inserted into an open end of hollow deck beam, the cable run alongside the screw shaft and over a guide pulley.

### Follower - Trombone Slide

In itself, this cable to shaft coupling imposes stress upon the shaft, which may engender frictional resistance between runner and screw thread. Moreover, shaft high speed rotation may cause shaft whip or flex out of a linear disposition, and this could interfere with runner transit along the thread.

Such shaft flex is inhibited by a supplementary low friction slide follower - spaced from the cable runner - and which tracks runner traverse upon the shaft. A sliding guide - termed a trombone slide - is fitted around the shaft to guide follower traverse.

In a particular construction, a pair of longitudinal slide or guide rods or tubes slides are disposed on diametrically opposite sides of the screw shaft. A follower yoke with spaced arms runs upon the slides and locates upon the screw shaft. The guides are mounted in the hollow deck beam by capture at opposite ends with bracing plates.

### Paired Cables

Each deck beam incorporates a pair of cables coupled to the screw shaft traveller within. One cable serves for direct lift or fall at an emergent end, the other for (lateral) drive transfer to a transfer pulley of the deck beam on the opposite side.

Traveller movement to an emergent cable end pays out cable and lowers the deck end at that side. Cable is also paid out laterally by transfer pulleys to a corresponding end of the opposite deck beam and thence to the end suspension at that side.

Transfer pulleys set at deck beam ends, route cable upward or across as required. For independent deck end movement, adjustment of either deck end has no effect upon the opposite deck end. That said, shortening of suspension cables at one end by the raising of that deck end, has the effect of drawing the deck towards the higher end.

Through lateral transfer pulleys and cable runs, operation of a single shaft - through a coupling at one emergent end - controls height adjustment of one deck end.

Lateral cable drive transfer arises at both deck frame ends - and is embedded within hollow transverse deck beams. The lateral transfer cable at each end resolves the lateral height matching of opposite deck sides at that end. Thus raising or lowering a deck end creates no lateral tilt. Overall, corresponding deck ends are raised or lowered simultaneously by corresponding amounts.

Cable transfer pulleys are set at opposite deck beam ends to re-direct internal cable runs away from and orthogonal to the transfer drive screw access - upward into a lift direction. Thus, say, at each deck frame member end, one pulley is set in the plane of an upright suspension cable and another pulley is set in an orthogonal plane containing the deck.

Cross-feed pulleys are also set at deck beam ends to transfer or share screw traveller movement between opposed beams. Thus, suspension cable movement at corresponding deck ends is cross-coupled between opposite deck sides. Each deck side thus experiences a corresponding rise or fall through cable intake or pay-out in relation to a deck frame.

In this way, cables emergent from respective deck beams - at corresponding deck ends, on opposite deck sides - are paid out or drawn in the same sense and at the same, co-ordinated, pace. Effectively, each screw shaft traveller draws a cable associated with that deck side along with a transfer or cross-coupling cable associated with the opposite deck side.

### Drive Co-ordination

Cable run disposition aside, an alternative way of controlling deck level, or rather raising and lowering of a level deck, is by co-ordination of multiple (dual) otherwise independent (demountable) drive motors - one at each deck side. This might require operator special training.

Alternative or additional cable configurations might be adopted - such as for level deck overall height adjustment options. For certain deck adjustment, when cable is paid out at one end, another cable, say tied to the same traveller, could be drawn in - that is the emergent end foreshortened - by the same amount.

The load centre of gravity (C of G) impacts upon deck disposition when elevated. Thus a load C of G forward or rearward of mid-way between opposite end suspension points would tend to shift the deck longitudinally, with attendant cable lean for or aft.

From a condition of initial loading of a vehicle upon a deck resting upon a container floor, lift of either deck end allows the load C of G to come into effect, by deck longitudinal positional settling.

Operator care has to be taken in deck load positioning, with use of wheel support tray adjustment, and slow deck end elevation, to avoid sudden longitudinal shift, which might be hazardous to personnel within the container upon loading.

Vehicle wheelbase and overhang measurements are taken in setting wheel tray support position, in order to optimise load space usage and obviate contact with container sides or other vehicle loads.

### Wheel Cradles

A vehicle is conveniently captured by wheel cradles or trays of wheel track span, respectively for opposite front + rear wheel pairs, spaced at wheel base.

### Shock Absorber

Suspension cables contribute modest ancillary shock absorber or cushion action to load handling. Thus, modest stretch or give may be designed-in, to reduce severity of local shock mounting loads upon the container structure.

### Demountable Drive

A portable, demountable drive motor, held by an operator and temporarily engaged with a coupling to an internal deck screw drive can be employed. Certain refinement in motor support, coupling and control are envisaged.

Sophisticated electronic motor controllers might be adopted. An example would be so-called 'three term' or `PID' controllers for precise motor output motion. These could take into account:
- a proportional term, related to output shaft speed;
- an integral term, related to summary movement; and
- a derivative term, related to rate of change of position.
   Electronic circuitry could offer automated deck orientation from level to prescribed tilt inclination, rate of deck movement, and indexed deck positioning. A remote radio link could allow operator separation from potentially hazardous deck and load movement.
   Such a facility would be compact and robust and reduce operator skill and attention demands. An operator would still supervise, but with attention freer to monitor for load clearance. Thus an operator would benefit from a simplified STOP / (RE-)START control facility - and optionally also REVERSE/FORWARD control facility.
   Programmable controllers, could store deck configurations for different load combinations, with predetermined capacities and clearances.

### Motor Power

Compact, high-output portable motors are desirable and suitably specified proprietary electric hand drills have been found. Loaded deck transition speeds of between some 0.1 - 1.5 m/s, with motors rated at 0.5-1.5 kW are achievable.

Although not necessary for relatively slow deck movement, progressive lead-in or lead-out transition speeds might be adopted to obviate abrupt shock loads on the drive train. Isolated (say, transformer coupled) stepped down voltage (say 110V or less) mains supplies can be used, in conformity with site safety considerations.

Overload protection can be provided by standard electrical trip switches cut-outs in the supply. Suitably rated motors with variable speed electronic trigger controls could be employed.

Drive brakes or detents are not generally needed, given the internal friction in drive transfer, but could be fitted if health and safety requirements dictated. Once deck adjustment has been completed, chains would be deployed for deck restraint.

### Support Post Disposition & Profile

Support post (trapezoidal) cross-section is profiled for complementary interfit with container side wall corrugations. This allows post inset within overall wall depth and reduces intrusion into internal container load footprint. That is, a load deck span closer to container internal span can be adopted. Alternatively, if available load span is not an issue, posts can intrude somewhat into internal void.

Posts locate upon spigot in bottom side rail of container structure and a capture stud in a container top rail by locating (pinch) pin. A post top fitting features a capture yoke to receive and clamp a suspension cable end termination ferrule or sleeve.

Posts have outwardly convex or pre-bowed profile between opposite ends. Post bow requires lateral jacking to straighten for installation between overlying top and bottom container rails. Attendant residual bending stress to promote container side wall (corrugation) location contact. This stabilises post and passes some bending stress to container wall - which bows slightly.

Post longitudinal spacing can be set somewhat greater than deck span - to allow certain longitudinal deck float therebetween. Such longitudinal deck float varies with relative paid out lengths of respective end cable pairs.

### Post Apertures

Posts have series of spaced locating apertures for restraint chains to corresponding deck ends. Such post apertures conveniently have key hole (contiguous slot + aperture) profile, for ease of chain link insertion and automatic retention by an adjacent link. Given inherent orthogonal disposition of successive chain links a natural snagging and locking interaction arises when inserted in or run through a key hole aperture profile.

### Minimal Deck Infill

A minimal deck structure reduces deadweight. Spaced perforated wheel trays are set upon paired transverse members at each deck end. These bridge between opposite longitudinal hollow chassis rails with embedded drive transfer.

A concave scalloped profile is adopted for an inboard tray pair, to help preserve wheel location in transit. A flat profile is retained for an outboard tray nearest a container access end to minimise drive-on ramp resistance.

One pair of trays and associated carrier frame are adjustable, say through mating serrated index plates at each side, to accommodate vehicle wheel base diversity. An index plate could be carried at the outboard edge of each tray to interact with an index on the inboard face of an outer longitudinal deck frame member.

### Upper Deck Travel Limit

In fully elevated or retracted condition, deck abuts underside of container roof. Taut paired restraint chains at each deck end hold elevated deck secure - to free under-deck void for general cargo.

Winches, such as ratchet tensioners, are desirable fitted to each restraint cable or chain, for individual tension adjustment. Operationally, in setting individual and collective restraint tie tensions, visual checks would be made upon deck position and manual (push - pull-swing / sway) checks upon deck movement freedom.

### Embodiments

There now follows a description of some particular supporting embodiments of the invention, by way of example only, with reference to, and as shown in, the accompanying schematic and diagrammatic and schematic drawings, in which:

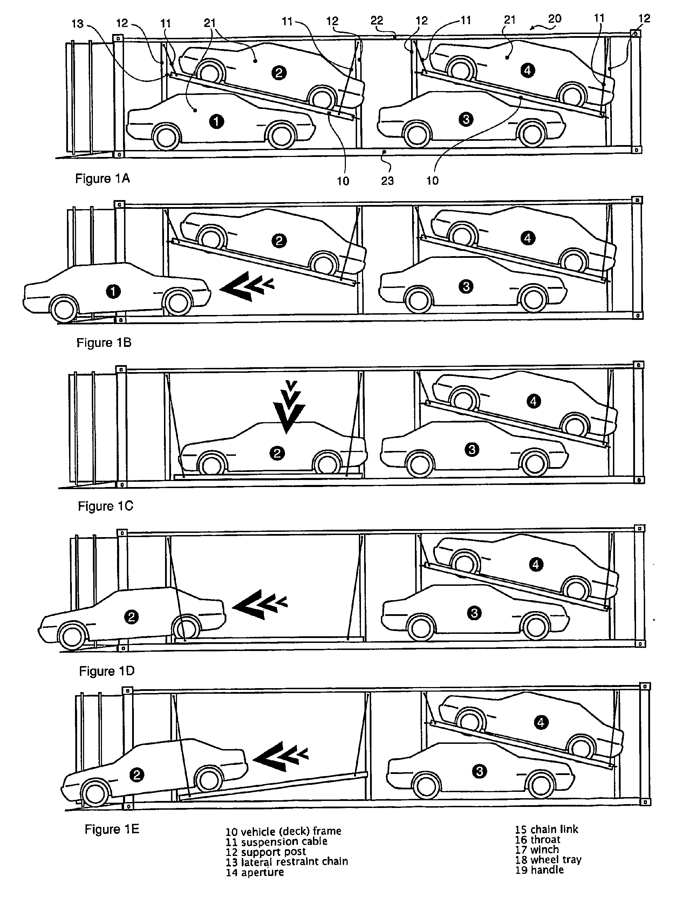

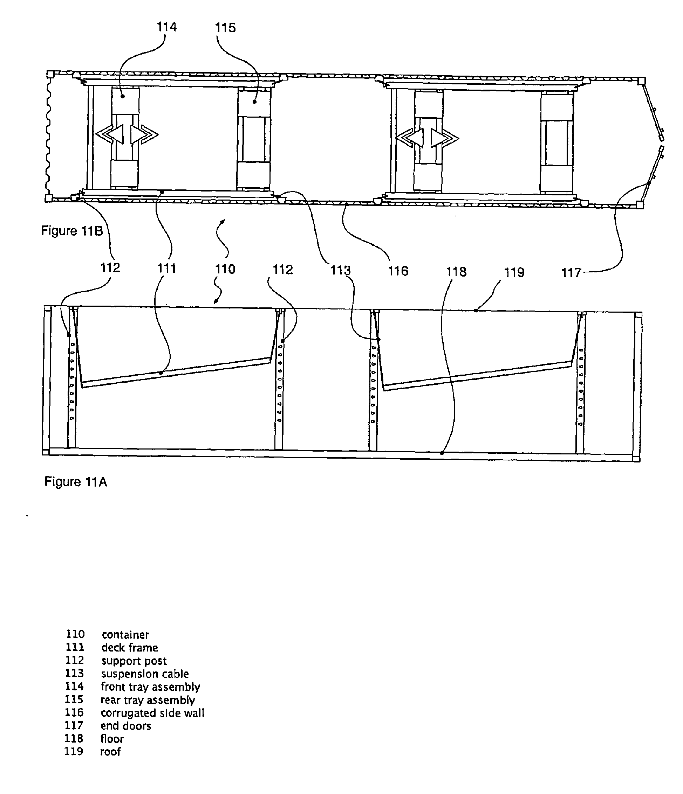

Figures 1A through 7 are simplified for ease of illustration of general layout and operation, whereas Figures 11A through 18B reflect supplementary constructional detail and design refinement. Figures 8 through 10 are not used.
Figures 1A through 1E illustrate an (un)loading sequence for vehicle carriage in an otherwise standard hollow walled box container - with twin tandem juxtaposed vehicle frames.

More specifically:
Figure 1A shows a container with two vehicles (cars) suspended in longitudinal succession at an elevated (above container deck) level on vehicle frames according to the present invention, and two internesting vehicles at deck level below.
Figure 1B shows vehicle No.1 reversing out of the container and leaving vehicle No. 2 suspended above.
Figure 1C shows vehicle No. 2 being levelled and lowered onto the container deck.
Figure 1D shows vehicle No. 2 being rolled (eg driven under power) out of the container.
Figure 1E shows an alternative sequence to Figures 1C and 1D, with inclined ramps - the front of a vehicle platform being lowered to deck for a vehicle to drive off, while the platform rear remains slightly raised.

Vehicle No.'s 3 and 4 may be unloaded by repeating the sequence described in Figures 1B through 1D.

Alternatively, vehicle loading can be carried out by the reverse of the above process.
Figure 2 shows the container of Figure 1A once all vehicles have been unloaded, with a stack of demounted vehicle frames at one end and a retracted vehicle frame at the other - leaving alternative surrounding general mixed cargo space.
Figures 3A through 3C show detailed views of one of the vehicle frames of Figure 1 A - without vehicle cargo.

More specifically:

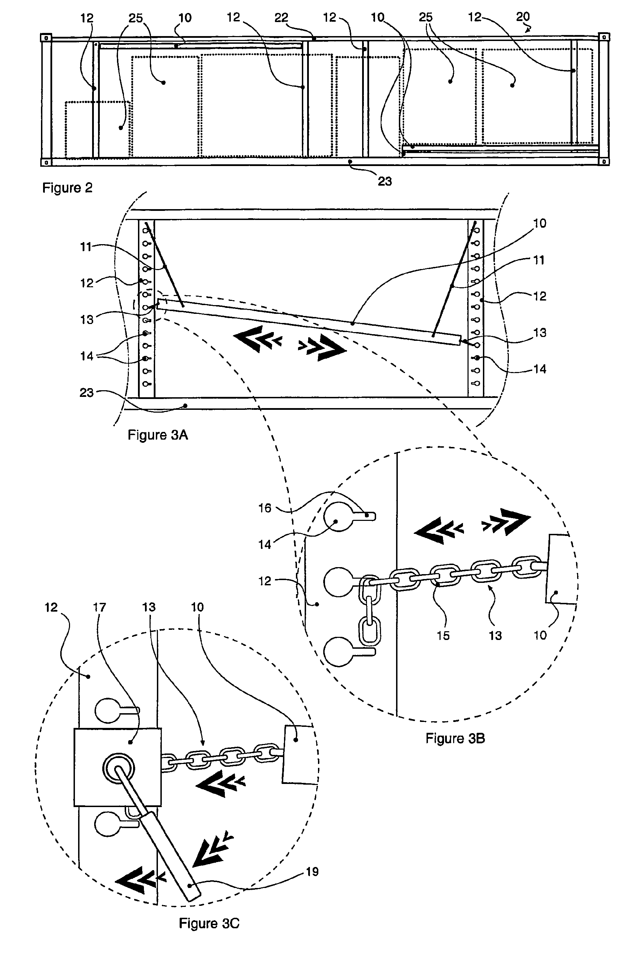

Figure 3A shows a cross-sectional view of a suspended vehicle frame with side support posts.
Figure 3B shows an expanded view of the chain link horizontal tensioning provision between a support post and frame.
Figure 3C shows an expanded view similar to that of Figure 3B, fitted with a ratchet winch for chain link adjustment.

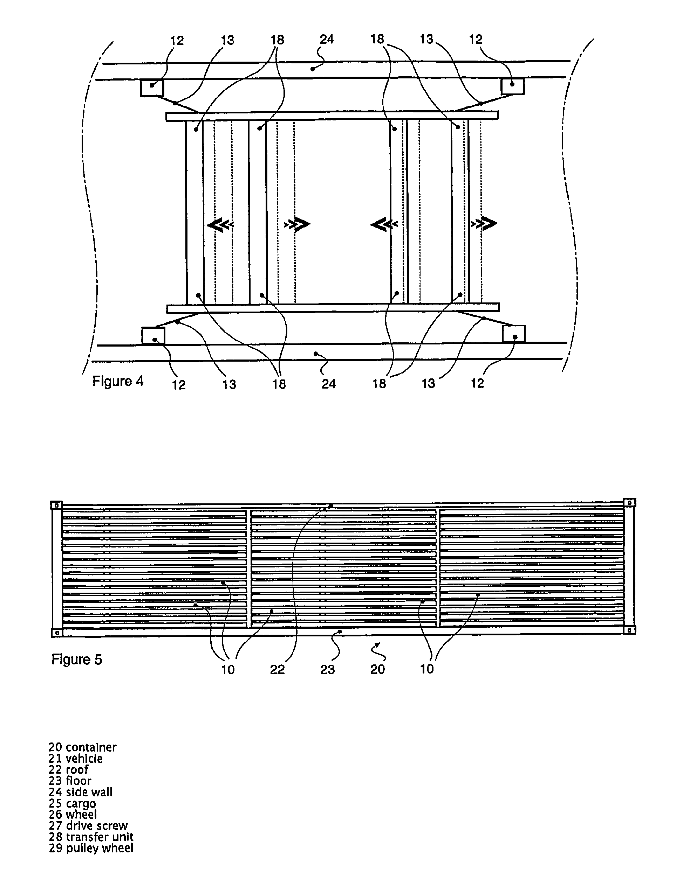

Figure 4 shows a plan view of the vehicle support frame of Figure 3A, illustrating mobility of wheel trays, troughs or cradles, to fit different vehicle lengths.
Figure 5 shows a standard 40ft (12.2m) container filled with three separate stacks of demounted vehicle frames.

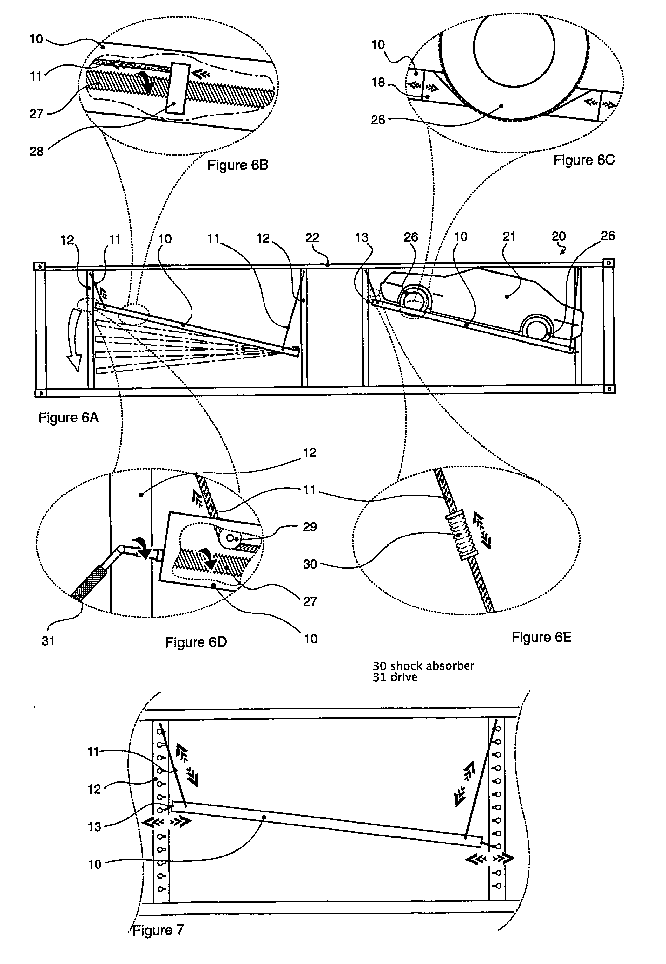

Figures 6A through 6E show a vehicle frame being lowered at one end and another vehicle suspended on a stationary frame at the other end - with attendant local enlargement views.

More specifically:
Figure 6A shows a vehicle frame mobility through successive incremental alterative positions, alongside a stationary frame with mounted vehicle.
Figure 6B shows local enlargement detail of a suspension cable screw pillar drive transfer set within a vehicle frame.
Figure 6C shows local enlargement detail of a vehicle wheel sat within an adjustable wheel trough on the vehicle platform.
Figure 6D shows local enlargement detail of drive being applied to a transfer screw for suspension cable adjustment.
Figure 6E shows local enlargement detail of a shock absorber cushion for a suspension cable.
Figure 7 illustrates combined platform tilt, fore and aft, with lateral adjustment facility.
{Figures 8 through 10 are not used I n the Figure sequence}
Figures 11A and 1B show an otherwise standard container adaptation or conversion for drive on/off vehicle storage, with tiered movable deck insertions upon inset side support posts;

More specifically ...
Figure 11A shows a sectional plan view of a standard container, pre-conversion, with single end access through paired hinged doors.
Figure 11B shows a sectioned side elevation of the container of Figure 11A post conversion, with paired elevated decks in longitudinal tilt mode with cable suspension from spaced inset support posts, to allow multi-level or tiered loading;

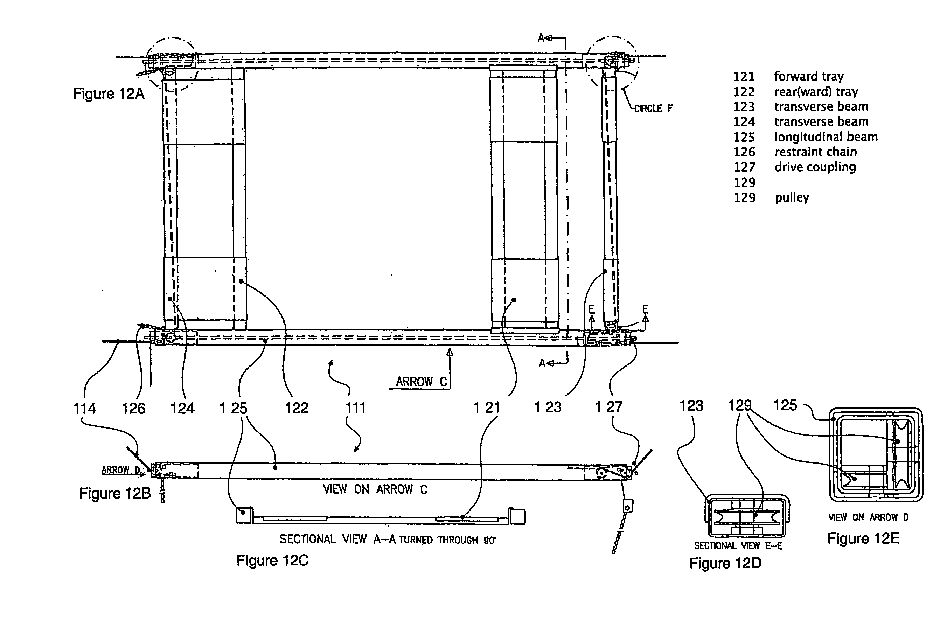

Figures 12A through 12E show constructional detail of an individual deck with embedded cable drive;

More specifically ...
Figure 12A shows a plan view of an assembled deck frame, with internal cable runs depicted in broken lines;
Figure 12B shows a side elevation of the deck of Figure 12A, with suspension cables emergent from opposite ends;
Figure 12C shows an end elevation of Figures 12A and 12B, reflecting vehicle wheel ramps underslung between opposed longitudinal deck beams;
Figure 12D shows an open end view along arrow D in Figure 12B of a longitudinal deck beam;
Figure 12E shows a sectional view along line E-E in Figure 12A of a transverse deck beam;

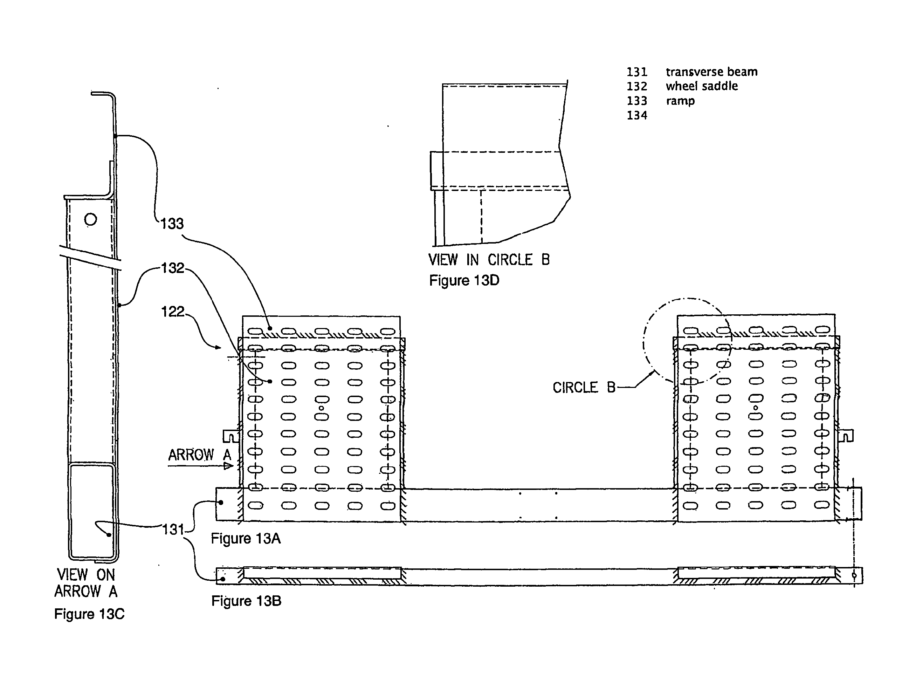

Figures 13A through 13D show detail of a vehicle wheel support platform for the deck of Figures 12A through 12D;

More specifically ...
Figure 31A shows a plan view of an individual load platform deck infill, configured as a wheel ramp assembly with spaced wheel trays set at opposite sides of a transverse deck beam;
Figure 13B shows a front elevation of the deck infill platform of Figure 13A;
Figure 13C shows a side end elevation of the deck platform of Figure 13A, taken along arrow A;
Figure 13D is an enlarged detail of a ramp end assembly taken of the circle B in Figure 13A;

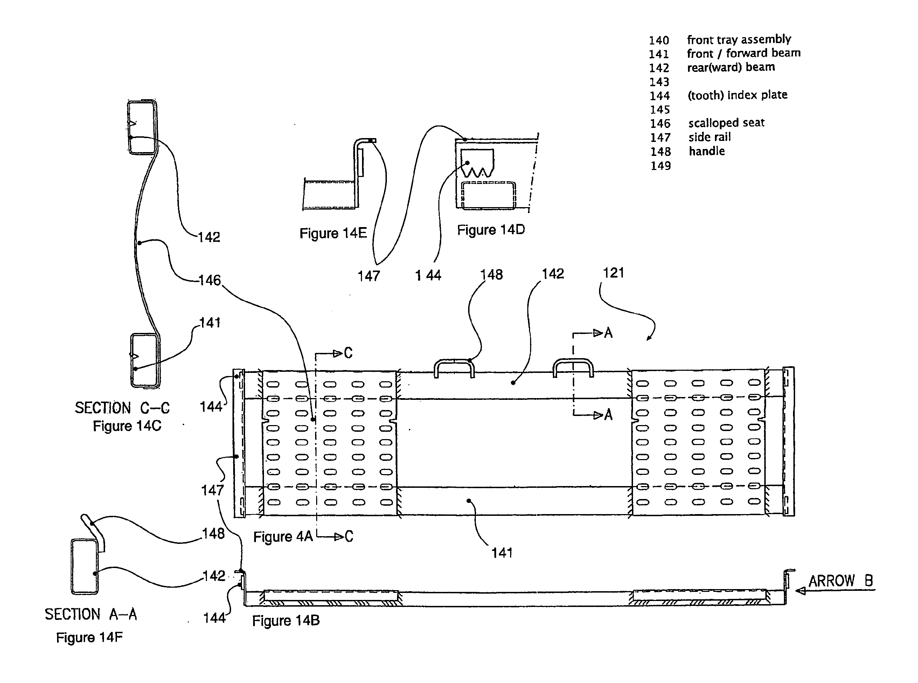

Figures 14A through 14B show another vehicle wheel support platform, set at the opposite deck end to the platform of Figures 13A through 13D, with scalloped profile wheel ramps for vehicle retention;

More specifically ...
Figure 14A shows an upper plan view of an adjustable deck infill platform;
Figure 14B shows a side elevation of the platform of Figure 14A;

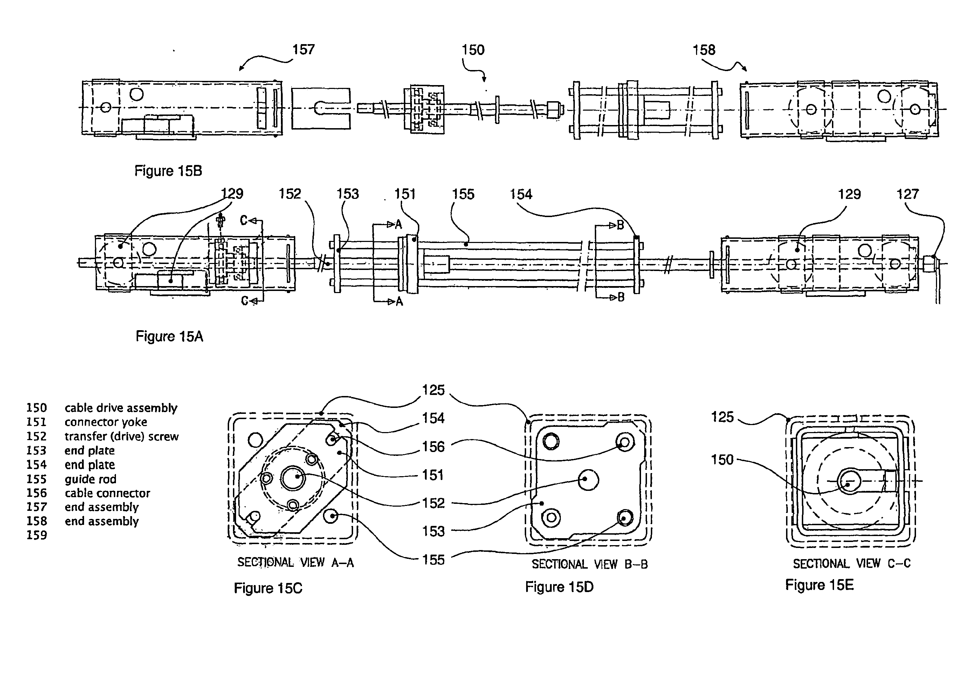

Figure 14C shows a section along the line C-C in Figure 15A;
Figure 14D shows a detail of indexed positional adjustment for the platform wheel troughs of Figure 15A;
Figure 14E shows an edge profile detail of Figure 14D;
Figure 14F shows a section along line A-A in Figure 14A;
Figures 15A through 15E show internal deck drive by combination cable and transfer drive screw disposed within hollow longitudinal deck frame members...

More specifically ...
Figure 15A shows a fragmentary side elevation of an internal deck beam cable drive assembly;
Figure 15B shows an exploded view of the cable drive assembly of Figure1 5A
Figure 15C shows a view taken along the line A-A in Figure 15A;
Figure 15D shows a view taken along the line B-B in Figure 15A;
Figure 15E shows a view taken along the line C-C in Figure 15A;

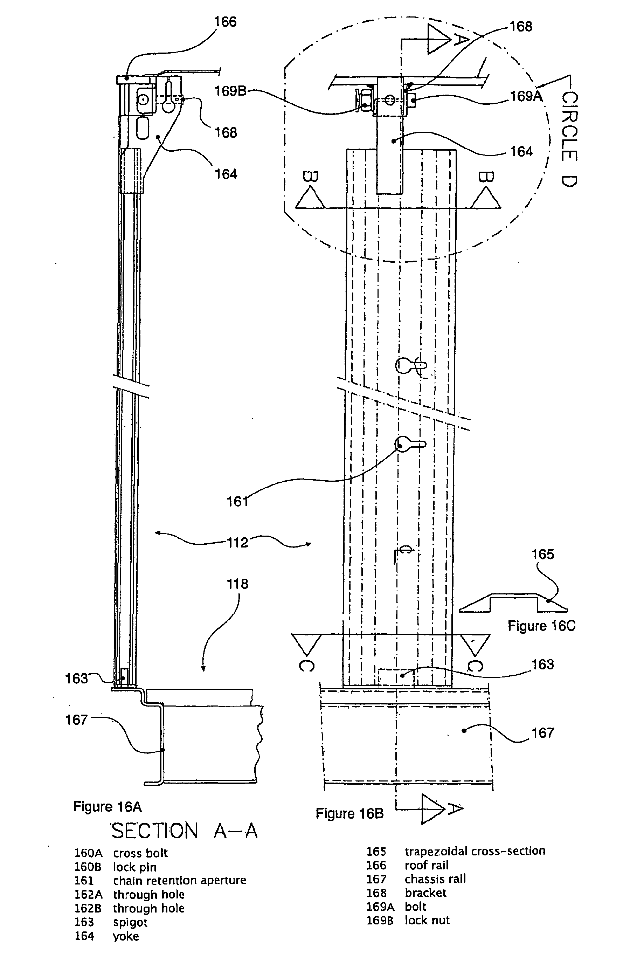

Figures 16A through 16C show deck support post configuration;

More specifically ...
Figure 16A shows a side elevation of a support post, with upper and lower end mountings to container side rails;
Figure 16B shows a face elevation of the support post of Figure 16A;
Figure 16C shows a section along C-C in Figure 16A;

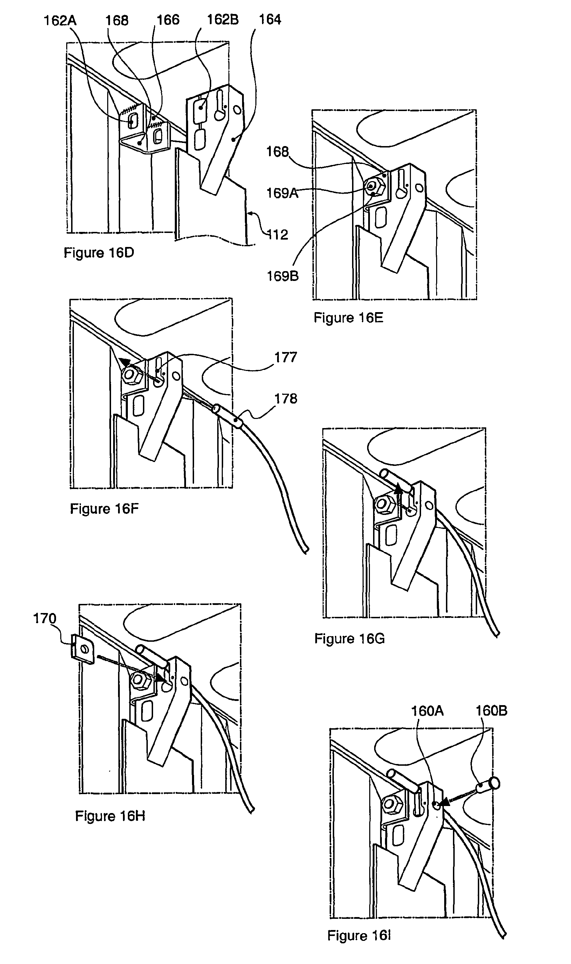

Figures 16D through 16I show post top mounting and suspension cable capture local detail on an enlarged scale with circle 'D' in Figure 6B;

More specifically ...
Figure 16D shows a support post upper end offered up to a bracket fitted to a container top rail;
Figure 16E shows a support post upper end inserted into a top rail bracket of Figure 16D and a cross-bolt inserted with capture nut for secure retention;
Figure 16F shows a suspension cable end ferrule offered up to and inserted into a keyhole profile locating aperture in a post top yoke fitting;
Figure 16G shows transition of an inserted cable end to a ferrule retention slot in the top rail bracket;
Figure 16H shows a curved top profile cable abutment plate offered up to a retention slot in a post top yoke;
Figure 16I shows a lock pin offered up to a cross-bore in a post top yoke for securing the cable retention plate of Figure 16H;

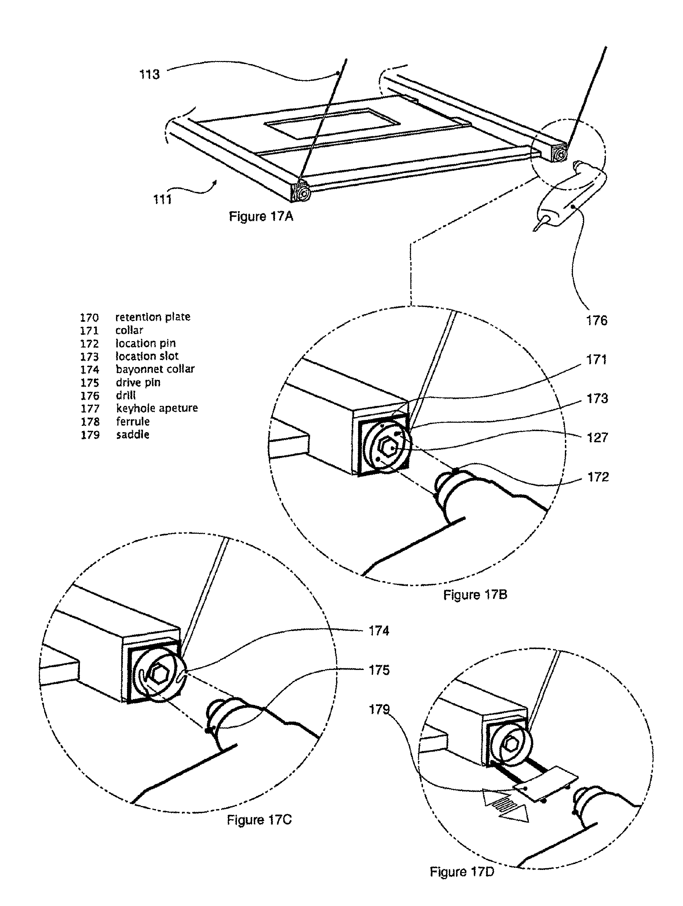

Figures 17A through 17D show demountable deck drive features;

More specifically ...
Figure 17A shows deck end drive coupling
Figure 17B shows an enlarged detail of Figure 17A with anti-torque coupling integrated into a drive connector;
Figure 17C shows a variant enlargement detail for Figure 17B with drive-on / spin-off coupling characteristics;
Figure 17D shows another variant enlargement detail to Figures 17B and 17C with motor support carriage;

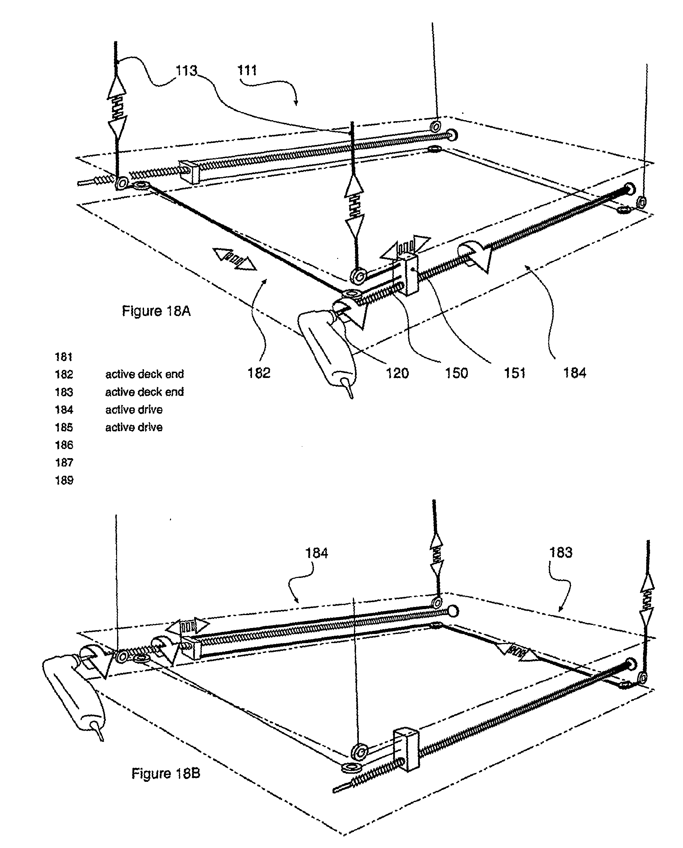

Figures 18A and 18B show suspension and transfer cable runs and deck end disposition adjustment;

More specifically ...
Figure 18A shows a demountable drive motor coupled to one deck side for elevation of one deck end;
Figure 18B shows a demountable drive motor coupled to an opposite deck side to Figure 18A for elevation of an opposite deck end.

Referring to the drawings, initially the sequence of Figures 1A through 7, then Figures 11A through 18B ...

In overview, a vehicle carriage frame or platform 10 is freely suspended by laterally and longitudinally opposed cables 11 set between opposed lateral side support posts 12 at each end. Frame 10 can thus float to allow manual positional adjustment over the floor footprint and in relation to other frames and loads, simply by operator manual action, until restrained.

For frame retention at a desired disposition, opposed lateral and longitudinal restraint chains 13 are deployed. Chains 13 are slung between frame 10 ends and keyhole profile apertures 14 in support posts 12. Chain links 15 can be threaded in succession through the combined profile of such keyhole apertures 14, but are self-locking once rotated and/or drawn into the narrower throat part 16.

### Horizontal Tensioning

Diagonally splayed tension cables 13 are deployed from each of the four corners of a rectangular platform 10 for planform positioning within a container 20. Opposite cables 13 can be adjusted in unison for platform 10 tilt about longitudinal, transverse - or even diagonal axes.

Tension 13 adjustment is by manual ratchets or power winches 17 - say by rotating handle 19 - with attendant mechanical advantage and/or incremental control.

A vehicle 21 can be constrained - by straps or ties (not shown) - to move with a platform 10 and to inhibit run-away upon platform 10 tilt. Such constraints are conveniently between vehicle wheels 26 and mobile under-trays or troughs 18.

Wheel Troughs - Vehicle Positioning

Wheel troughs or trays 18 conveniently span between opposite vehicle 21 sides. As can be seen in Figure 4, wheel troughs 18 are slidable within frame 10, to accommodate different vehicle 21 lengths.

Thus, a vehicle may be positioned within carriage frame 10, which itself can be positioned within support frame members 12 through lateral, longitudinal and height adjustment and tensioning.

### Overhead Suspension

Suspension cables 11 are also splayed in side and transverse elevation, to achieve an overall trapezoidal array form. This imparts stability, albeit allows some swing - which supplementary restraint chains 13 can inhibit.

Combined vehicle 21 and platform 10 weight automatically tensions suspension cables 11 running to higher mounting points - such as inset side support posts 12. This still allows upward platform 10 displacement, unless constrained, by, say, supplementary links or ties 13.

In a more elaborate variant, cables 11 are arranged in vertically opposed upper and lower arrays. With cable winches 17 at platform 10 level - say, in hollow platform frame 10 members - static cable end mountings can be employed at upper (say, roof 22) levels.

### Support Posts

Inset posts 12 allow mounting and bracing, say through multiple apertures 14 - without local container 20 structure reinforcement. Posts 12 can be fitted between inherently more robust junctions of roof 22 or floor 23 and side walls or rails 24.

Conveniently, posts 12 may be inset within corrugation valleys of a container 20 side wall 24. Thus, posts 24 are prevented from obstructing useable cargo space - particularly when a vehicle frame 10 is not required. Consequently, posts 24 could be largely permanent features of a container 20.

### Frame Retraction

When not in use, a vehicle frame 10 may be retracted to lie directly under a container 20 roof 22. This allows maximum underlying space for alternative cargo 25 and / or other demounted vehicle frames 10 - as shown in Figure 2.

### Demountability

Vehicle carry frames or platforms 10 are demountable - say once lowered to floor 23 level or supported upon another underlying (demounted) platform 10. Once demounted, platforms 10 can be mobile upon wheels, runners, slides, trolleys or carriages (not shown).

### Drive On/Off Loading

Drive on - drive off loading and unloading can be effected once platforms 10 are tilted, with one end resting at floor 23 level or fully lowered to sit level.

### Internalised Drive

Height and tilt adjustment of platform 10 may be achieved through an internalised drive mechanism within platform 10 - as illustrated in Figure 6B. The drive mechanism comprises a (spiral threaded) drive transfer screw 27 with a transfer carrier unit 28 secured to cable 11 which runs around pulley wheel 29, such that rotation of screw 27 either draws in or lets out cable 11.

Thus, suspension cables 11 may be (demountably) attached to the tops of support posts 12 and allowed to extend/retract from the corners of platform 10. The drive mechanism may be operated by a manual crank handle or motor power drive 31.

### Cable Shock Absorber

Suspension cables 11 may incorporate shock absorber cushions 30 to provide stretch and/or give upon vehicle frame 10 height adjustment.

### Referring to Figures 11A through 18B ...

A general purposed freight shipping container 110 is adapted for vehicle carriage by tandem adjustable deck installations of the invention.

Essentially, open deck frames 111 are suspended at each corner by cables 113 from support posts 112. Posts 112 have a bespoke profile for inset into recesses of corrugated side walls 116, as detailed in Figures 16A and 16B. Decks 111 have a minimal open lattice structure with a pair of longitudinal beams 125 and intervening transverse beams 123, 124 at opposite ends.

A pair of transverse wheel tray assemblies 114, 115 are deployed between longitudinal beams 125. As detailed in Figures 12A through 21E, a rearward tray 115 is adjustable longitudinally, whereas a forward tray 114 is fixed.Such a minimal deck 111 infill format reduces dead load and thus increases productive payload.

That said, for say a 40 ton nominal payload container even four vehicles of some 1.5 to 2.0 tons represents an overall light load.

The disposition of the container when grouped with others en masse in a container ship is thus assessed accordingly - and will generally be in upper tiers where more hull pitch and roll effect is experienced in open sea transit.

Hence the value of deck and load restraint. Thus decks are secured by restraint chains 126 and vehicles (not shown) are strapped to decks by adjustable tension cargo restraint straps or webbing (not shown).

Container 110 (un)loading is through end doors 117, so decks 111 are (un)loaded in succession. In a fully elevated condition, each deck 111 nests close to the underside of a container roof 119. In a fully lowered condition, each deck 111 rests upon a container floor 118. In intermediate conditions, decks 111 can be tilted to a desired inclination (as depicted in Figure 18A) with one end at a different height from the other, in relation to container floor 118.

Operationally, for conventional format vehicle carriage, vehicles are drive-on, drive-off (un)loaded. As access is through end doors at what is effectively a container rear end in relation to the orientation of the container in road transport.

Vehicles could be reversed on to decks 111 and ultimate deck tilt and elevation would reflect vehicle upper profile. Thus progressively reduced vehicle depth from rear to front with windscreen slope from roof to lower bonnet line would allow the vehicle front end to be brought higher, closer to underside of roof 119.

Once a vehicle is loaded upon a deck 111, alternate deck ends are raised in succession, using a cable suspension demountable drive, elaborated in Figures 17A through 18B.

In one load configuration, with on overall elevated, but tilted or inclined deck, an inboard deck end could be set lower than an outboard deck end . This would create a wedge shaped under deck load space for drive on of a vehicle upon the floor 118. There is thus scope for twin tiered load disposition, with, say, a vehicle load upon an elevated deck 111 and a vehicle load upon a container floor 118.

### Free Floating Deck Support Mode

The elevated vehicle load can be tilted with respect to an underlying load upon the floor 118 to allow close stacking interfit taking advantage of vehicle profile. The facility independently to adjust deck end height through drive to cable suspension is thus significant.

Similarly, an ability to make fine suspended deck positional adjustment, by lateral and/or longitudinal movement, under operator manual control, with weight borne by suspension cables, is important. This represents a free-floating deck support mode.

Level deck elevation and adjustment is still possible where operational requirements allow - such as with low profile vehicles (sports cars) which occupy a smaller fraction of available load depth - that is, deck to floor or deck to roof height.

When elevated to a desired disposition, decks are secured by restraint chains 126 set between deck ends and support posts 112. More specifically, chain 126 links interact with key hole profiled apertures 161 in supports posts 112

Thus when chain link 126s are successively aligned with a key hole slot 161, the chain 126 a whole can be drawn through and drop internally within a hollow post structure, but its passage is inhibited directly a link is set orthogonal to a slot.

### Deck Construction

Longitudinal side frames 125 are set at opposite deck 111 sides, with intervening front and rear transverse beams 123, 124 carrying front and rear wheel trays 122, 123 respectively.

Suspension cable 114 runs though each longitudinal frame 125'and over transfer pulleys 128 at each end to direct upward routing to overhead support at the head of support posts 112. Similarly, transfer cables run through front and rear hollow transverse beams 123, 124 over transfer pulleys 129.

Restraint chains 126 attached to outboard ends of frames 125 are secured to keyhole apertures 161 in the inside faces of supports posts 112. Chains 126 can be retracted and stored passively and unobtrusively within hollow deck frame or support post box sections until required for deployment. Alternatively, chains 126 could simply hang between apertures on support posts 112.

A rear tray assembly 15 is detailed in Figures 13A through 13D and features wheel saddles 132 with respective outboard end (un)loading ramps 133. Perforated sheet can be used for weight reduction and drainage. If stamped from the underside, perforation edge lip upstands can provide additional wheel grip.

A forward tray assembly 114 is detailed in Figures 14A through 14F and features scalloped profile wheel trays 146 (for wheel retention) set between front and rear transverse beams 141, 142 respectively.

Tray 114 has longitudinal adjustment provision to accommodate different wheelbase vehicle loads. Specifically, toothed index plates 144 set into side rails 147 linking front and rear beams 141, 142, are locatable in complementary tooth plates set on the inner faces of longitudinal deck rails 125.

Side rails 147 have an L-shaped overhang shelf or lege profile, whose fop flange sits upon longitudinal deck rail 125 to allow slidable support, once index location has been disengaged.

Spaced handles 148 at the outboard edge of rear transverse beam 142 allow operator manual lift release and longitudinal re-positioning of index plates 144. This is undertaken before vehicle loading by taking measurements in relation to wheel base.

In Figures 15A through 15E, deck suspension cable drive 150 features an internal transfer screw 152 running between end assemblies 157, 158 set within hollow longitudinal deck rails 125.

An intermediate follower 151 runs upon transfer screw 152 and diametrically opposed guide rods or tubes 155 set between end plates 153, 154. The interaction between follower 151 and guide rods 155 creates transverse stiffness and inhibits flex of transfer screw 152 - in turn helping preserve free-running of follower 151.

Follower 151 traverses transfer screw 152 upon rotation and is never more than some one third or one quarter the overall transfer screw length. So unsupported transfer screw 152 span is reduced,and potential harmonic vibrational modes suppressed.

Cable 113 is secured to a connector yoke 151 by interaction of cable end termination sleeves with yoke 151 connection passages 156. As transfer shaft 152 rotates, cable connector yoke 151 traverses longitudinally, drawing in or paying out cable 113 according to rotational direction. Cable 113 twist is inhibited by limited clearance between yoke 151 and guide rods 155.

### Support Post Mounting

Figures 16A through 16I detail support post 112 installation between a lower locating spigot 163 set into a container chassis rail 167 and an upper clamp bracket set under a container roof rail 166.

An offset yoke 164 at the upper end of a support post 112 is juxtaposed with an open bracket fixture 68 secured (say, by welding) to a roof rail 166. Bracket 68 has a through-hole 162A for alignment in a through hole 162B in the upper rear end of yoke 164. Yoke 164 is secured by a through-bolt 169A spanning bracket holes 162A via yoke through-hole 162B and closed by a lock nut 162B.

With yoke 164 so secured, a suspension cable end termination ferrule 178 is fitted into the enlarged lower end of a keyhole slot 177 in yoke 164.

Ferrule 178 is drawn upwards and backwards to be a snug fit within yoke 164. Ferrule 178 and so cable 113 is then held captive by a curved profile retention plate 70, itself secured by lock pin 69B in a cross-bore 60A in yoke 64.

Retention plate 170 upper edge curvature allows progressive cable 113 'droop' over a shallow arc between horizonal end termination ferrule 178 and a downward run to deck 111. In this way excessive local cable 113 strain is obviated.

In practice, a support post 112 has a pre-formed concave bow between its opposite ends. Post 112 installation between spigot 163 and bracket 68 requires modest transverse jacking between support posts 112 on opposite container sides. This preloads the post 112 and part of this load is transferred to a container corrugated side wall - which may flex and bulge slightly in reaction.

A post 112 has a trapezoidal cross-sectional profile 165, as reflected in Figure 16C, to allow snug inset interfit with container side wall corrugations. Keyhole apertures1 61 are set into inward faces of support posts 112 for restraint chain location.

Figures 17A through 17D reflect demountable drive for cables 113. Transfer screw 152 emerges from outboard end of hollow deck chassis rail 215 and terminates at an end coupling nut 127 such as a hexagonal nut or stud. Coupling nut 127 is captured by a complementary hexagonal socket head, fitted to the output shaft of a portable drive motor 176, such as a proprietary electric drill with cranked offset drive head.

Anti-torque reaction interface between drill 176 output and coupling 127 is provided by location of opposed diametral pins 172 within corresponding slots 173 around screw shaft 152 end coupling 127.

An operator is thus relieved of counter-bracing support in addition to passive drill weight. In fact some drill weight can be taken through a guide collar 171 interaction with a drill chuck. Such torque reaction bracing is particularly useful should drive load increase suddenly, such as when taking up deck drive or reaching a deck travel unit.

An automatic drive-on / throw-off coupling refinement is depicted in Figure 17C. A bayonet style connector with spiral slots 174 in a collar 171, receive pins 175 set around a drill chuck. Such a coupling draws drill output into engagement upon rotation, but throws off upon over-run. Drill reversal for opposite deck movement would need a more elaborate bayonet interfit profile.

Figure 17D depicts a more pronounced drill body support - configured as a pull-out saddle or tray 179.

Figures 18A and 18B reflect deck elevation and lowering at one or other end by a demountable drive motor on one or other side at one deck end. Alternative opposite active deck ends 183, 183 are activated by respective active drives 184, 185.

Paired motors could be deployed on both sides, for co-ordinated deck level (or fixed tilt or inclination) overall height adjustment.

An alternative cable arrangement could be contrived, by which drive coupling at one side and/or at one end, effects level deck height adjustment. This would operate for deck level, or fixed deck tilt operation, but would forego deck tilt adjustment.

A combination of deck tilt and level adjustment might be contemplated, but use of multiple discrete drive motors, albeit operated in unison, would allow less complex cable runs.

### Electronic Motor Controllers

Electronic motor controls, such as PID (Proportional Integral Derivative) or 'three-term' controllers could be employed for precise motor control and co-ordination or synchronisation of multiple motors.

As sophisticated motor controllers, these would allow programming of deck movement to predetermined positions, inclinations at prescribed transition rates.

A combination of screw and hydraulic assistance might be employed for cable traveller movement and for cable pay out or retraction. Modest resilient cable stretch would impart shock resistance in load bearing and handling.

### Mix and Match

Generally, in the embodiments, where feasible and appropriate, features may be selectively varied, mixed and matched - within the scope of the appended claims - to suit particular operational requirements. It is impracticable to describe every possible such combination or variant, but examples include ..
- Cable rather than chain restraints for deck capture.
- Cable restraints linked to or re-routed from suspension.
- Suspension cable deck decoupling and wind up and way.
- Embedded drive transfer within side support posts.
- Deck inset within floor recesses for overlay with general cargo.

### Component List

### Figures 1A-7

- 10: vehicle (deck) frame
- 11: suspension cable
- 12: support post
- 13: lateral restraint chain
- 14: aperture
- 15: chain link
- 16: throat
- 17: winch
- 18: wheel tray
- 19: handle
- 20: container
- 21: vehicle
- 22: roof
- 23: floor
- 24: side wall
- 25: cargo
- 26: wheel
- 27: drive screw
- 28: transfer unit
- 29: pulley wheel

- 30: shock absorber
- 31: drive

- NB: Figures 8-10 not used.

### Figures 11A - 11B

- 110: container
- 111: (vehicle) deck frame
- 112: support post
- 113: suspension cable
- 114: front tray assembly
- 115: rear tray assembly
- 116: corrugated side wall
- 117: end doors
- 118: floor
- 119: roof

### Figures 12A - 12E

- 120:
- 121: forward tray
- 122: rear(ward) tray
- 123: transverse beam
- 124: transverse beam
- 125: longitudinal beam
- 126: restraint chain
- 127: drive coupling
- 128: transfer pulley
- 129: pulley

### Figures 13A-13D

- 30:
- 31: transverse beam
- 32: wheel saddle
- 33: ramp
- 34:

### Figures 4A-4F

- 40: front tray assembly
- 41: front / forward beam
- 42: rear(ward) beam
- 43:
- 44: (tooth) index plate
- 45:
- 46: scalloped seat
- 47: side rail
- 48: handle
- 49:

### Figures 5A - 5E

- 50: cable drive assembly
- 51: connector yoke
- 52: transfer (drive) screw
- 53: end plate
- 54: end plate
- 55: guide rod
- 56: cable connector
- 57: end assembly
- 58: end assembly
- 59:

### Figures 6A - 6I

- 60A: cross-bolt
- 60B: lock pin
- 61: chain retention aperture
- 62A: through hole
- 62B: through hole
- 63: spigot
- 64: yoke
- 65: trapezoidal cross-section
- 66: roof rail
- 67: chassis rail
- 68: bracket
- 69A: bolt
- 69B: lock nut

### Figures 7A-7D et al

- 70: retention plate
- 71: collar
- 72: location pin
- 73: location slot
- 74: bayonet collar
- 75: drive pin
- 76: drill
- 77: keyhole aperture
- 78: ferrule
- 79: saddle

### Figures 8A - 8B

- 80:
- 81:
- 82: active deck end
- 83: active deck end
- 84: active drive
- 85: active drive
- 86:
- 87:
- 88:
- 89:

## Claims

1. A free-floating suspended deck arrangement comprising a rectangular or polygonal platform deck (10), an array of flexible suspension elements, such as cables (11), to allow free deck lateral and longitudinal movement along with a facility for end height and/or overall deck tilt adjustment, with suspension element length.
**characterised by** spaced deck support posts (12), further suspension elements (13) being disposed between deck corners or apices and support posts.

2. A deck arrangement of Claim 1, configured as a self-contained conversion module, for vehicle carriage as containerised cargo in an otherwise standard general freight container (20), with a demountable support frame or gantry including the support posts (12) at opposite deck sides and ends, to carry the adjustable length suspension elements (11) and supplementary adjustable restraints (13) to be used between deck and a container frame.

3. A deck arrangement of Claim 1, the further suspension elements comprising flexible restraint ties (13), such as chains, deployable at opposite deck ends and adjustable to curtail or inhibit deck lateral or longitudinal float upon deck elevation.

4. A deck arrangement of either preceding claim, wherein the suspension elements are cables, with suspension cable transfer drive (50) within hollow deck frame (111) sections.

5. A deck arrangement of any preceding claim, wherein the suspension elements are cables, with a drive transfer screw (52) embedded within hollow deck frame sections, traversable by travellers coupled to suspension cables (11) emergent from frame ends about transfer pulleys (128).

6. A deck arrangement of any preceding claim with a hollow deck frame member incorporating a drive screw and a trombone slide follower of slide tubes disposed at opposite sides of the drive screw with a cable carrier running thereupon as a diametral constraint to inhibit shaft flex of the drive screw.

7. A deck arrangement of any preceding claim, wherein the further suspension elements are individually adjustable restraint elements (13), for lateral and longitudinal deck frame positioning, bracing and restraint.

8. A deck arrangement of any preceding claim, with deck frame suspension upon tension elements, such as links, cables, wires, cords or chains, with tension adjustment means, such as a ratchet winch, for selective individual and relative tensioning.

9. A deck arrangement of any preceding claim, with opposed flexible restraint ties, such as chains, between deck frame and support posts, selectively, relatively and differentially adjustable, for positioning and (controlled) restraint.

10. A deck arrangement of any preceding claim, configured for vehicle carriage with a skeletal perimeter frame, surmounted by local platforms forming the suspended deck, such as spaced ramps for local wheel support, and drive-on/off (un)loading.

11. A deck arrangement of any preceding claim, with adjustable wheel platforms or trays upon a deck carrier frame.

12. A deck arrangement of any preceding claim, with profiled keyhole apertures in support posts to receive a restraint chain threaded therethrough, but whose chain links are self-locking, once rotated and drawn into a narrow aperture throat.

13. A deck arrangement of any preceding claim, fitted with a support post mounted winch for restraint chain tension.

14. A deck arrangement of any preceding claim, with a deck frame demountable from side support posts to allow removal, relocation of stacking upon like deck frames suspended or demounted, within or beyond container confines.

15. A deck arrangement of any preceding claim, retractable into otherwise redundant container headspace by full elevation upon side support posts to underlie a roof, for compact stowage.

16. A freight container fitted with a deck arrangement of any preceding claim.

17. A container of Claim 16, with deck support posts of trapezoidal profile, inset within complementary profile recesses in corrugated container side wall profiles.

## Patentansprüche

1. Eine frei schwebende, hängende Platttormanordnung, die aus einer rechteckigen oder vieleckigen Plattform (10), einer Reihe von biegsamen Hängeteilen, so wie Kabeln (11), besteht, um eine freie seitliche und längliche Bewegung der Plattform mit einer Einrichtung zur Einstellung der Endhöhe und/oder der gesamten Neigung der Plattform in der Länge des Hängeteils zu ermöglichen, **gekennzeichnet durch** beabstandete Plattformstützpfosten (12), weitere Hängeteile (13), die zwischen den Ecken oder Spitzen der Plattform und den Stützpfeilern angeordnet sind.

2. Eine Plattformanordnung gemäß Anspruch 1, die als ein selbsthaltendes Umwandlungsmodul für den Transport mit Hilfe eines Fahrzeugs als containerisierte Fracht in einem in anderer Weise standardisierten, allgemeinen Frachtcontainer (20) mit einem abnehmbaren Stützrahmen oder Portal/Bock ausgestaltet ist, der die Stützposten (12) auf sich gegenüberliegenden Plattformseiten und Plattformenden beinhaltet, um die in der Länge verstellbaren Hängeteile (11) und zusätzliche, einstellbare Rückhaltemittel (13) zu tragen, die zwischen der Plattform und einem Containerrahmen zurAnwendung kommen.

3. Eine Plattformanordnung gemäß Anspruch 1, wobei die weiteren Hängeteile bewegliche Halter für Rückhaltemittel (13), so wie Ketten, umfassen, die auf sich gegenüberliegenden Plattformenden auseinandergezogen werden können und einstellbar sind, um das seitliche oder längliche Schweben der Plattform beim Anheben der Plattform zu verkürzen oder zu verhindern.

4. Eine Plattformanordnung gemäß irgendeinem der vorangehenden Ansprüche, wobei die Hängeteile Kabel mit einem hängenden Kabelübersetzungsantrieb (50) in hohlen Plattformrahmenabschnitten (111) sind.

5. Eine Plattformanordnung gemäß irgendeinem der vorangehenden Ansprüche, wobei die Hängeteile Kabel mit einer Antriebsübersetzungsschraube (52) sind, die in hohlen Plattformrahmenabschnitten eingebettet ist, die mit Hilfe von Laufkatzen schwenkbar und mit den hängenden Kabeln (11) verbunden ist, die aus den Rahmenenden heraustreten, was durch Übersetzungsflaschenzüge verursacht wird.

6. Eine Plattformanordnung gemäß irgendeinem der vorangehenden Ansprüche mit einem hohlen Plattformrahmenteil, das eine Antriebsschraube und einen posaunenartigen Schiebemitnehmer für Schieberohre beinhaltet, die auf sich gegenüberliegenden Seiten der Antriebsschraube mit einem Kabelträger, der sich als diametralisches Rückhaltemittel darauf befindet, angeordnet sind, um die Flexibilität der Welle der Antriebsschraube zu hemmen.

7. Eine Plattformanordnung gemäß irgendeinem der vorangehenden Ansprüche, wobei die Hängeteile individuell einstellbare Rückhaltemittelteile (13) zur seitlichen und länglichen Positionierung, Versteifung und Rückhaltung des Plattformrahmens sind.

8. Eine Plattformanordnung gemäß irgendeinem der vorangehenden Ansprüche mit einer Plattformrahmenaufhängung auf Spannungsteilen, so wie Verbindungen, Kabel, Drähte, Bänder oder Ketten, mit Mitteln zum Einstellen der Spannung, so wie eine Ratschwinde (Sperr-, Klinkwinde), zur wahlweisen, individuellen und relativen Einstellung der Spannung.

9. Eine Plattformanordnung gemäß irgendeinem der vorangehenden Ansprüche mit sich gegenüberliegenden beweglichen Haltern für Rückhaltemittel, so wie Ketten, zwischen dem Plattformrahmen und den Stützpfeilern, die zur Positionierung und (zur kontrollierten) Rückhaltung wahlweise, relativ und unterschiedlich eingestelltwerden könnten

10. Eine Platiformanordnung gemäß irgendeinem der vorangehenden Ansprüche, die zum Transport mit Hilfe von Fahrzeugen mit einem skelettartigen Umfangsrahmen ausgestaltet ist, der von vor Ort befindlichen Plattformen, die die hängende Plattform -so wie beabstandete Rampen zur Radunterstützung vor Ort und eine Einschalt- und Ausschaltvorrichtung zum Be-/Entladen- bilden, überragt wird.

11. Eine Plattformanordnung gemäß irgendeinem der vorangehenden Ansprüche mit einstellbaren Radplattformen oder Radtellern auf einem Plattformträgerrahmen.

12. Eine Plattformanordnung gemäß irgendeinem der vorangehenden Ansprüche mit profilierten Schlüsselkranköffnungen, die sich in den Stützposten befinden, um eine Rückhaltekette, die hierin eingefädelt ist, aufzunehmen, aber deren Kettenverbindungen selbstverriegelnd sind, wenn sie sich erst einmal drehen und in eine enge Eintrittsöffnung hineingezogen wurden.

13. Eine Plattformanordnung gemäß irgendeinem der vorangehenden Ansprüche, die mit einer an einem Stützpfosten befestigten Winde zum Spannen der Rückhaltekette ausgerüstet ist.

14. Eine Plattformanordnung gemäß irgendeinem der vorangehenden Ansprüche mit einem Plattformrahmen, der von den seitlichen Stützpfosten abmontiert werden kann, um das Entfernen, die Verlagerung oder das Stapeln von Material auf ähnlichen hängenden oder abmontierten Plattformrahmen innerhalb oder jenseits des Bereichs des Containers zu ermöglichen.

15. Eine Plattformanordnung gemäß irgendeinem der vorangehenden Ansprüche, die in den Kopfraum eines in anderer Weise überzähligen Containers durch vollständiges Anheben auf die seitlichen Stützpfosten eingezogen werden kann, um zwecks kompakter Lagerung unter einem Dach zu liegen zu kommen.

16. Ein Frachtcontainer, der mit einer Plattformanordnung gemäß irgendeinem der vorangehenden Ansprüche ausgerüstet ist.

17. Ein Container gemäß Anspruch 16 mit Plattformstützpfosten von trapezförmigem Profil, der in zusätzlichen Profilausnehmungen in gerippten Seitenwandprofilen des Containers eingesetzt ist.

## Revendications

1. Un agencement de pont suspendu librement flottant, comportant une plateforme (10) formant pont rectangulaire ou polygonale, une série d'éléments de suspension flexibles, tels que des câbles (11), permettant un mouvement libre latéral et longitudinal du pont, de même qu'une installation pour le réglage de la hauteur d'extrémité et/ou le réglage de l'inclinaison de l'ensemble du pont, au moyen de la longueur des éléments de suspension,
**caractérisé par**
des montants (12) de support de pont espacés,
d'autres éléments de suspension (13), disposés entre des angles ou des sommets du pont et
des montants de support.

2. Un agencement de pont selon la revendication 1, configuré comme un module de conversion auto-contenu, pour le transport de véhicules sous forme d'une charge contenue dans un container de fret (20) standardisé, d'utilisation générale, avec un châssis ou portique de support démontable incluant les montants de support (12) au niveau de côtés et d'extrémités opposées du pont, pour porter les longueurs réglables des éléments de suspension (11) et des éléments de sollicitation (13) réglables supplémentaires destinés à être utilisés entre le pont et une structure de container.

3. Un agencement de pont selon la revendication 1, lesdits éléments de suspension supplémentaires comprenant des liens de sollicitation (13) flexibles, tels que des chaînes, déployables au niveau d'extrémités opposées du pont et étant réglables pour limiter ou inhiber le flottement latéral ou longitudinal du pont lors de l'élévation du pont.

4. Un agencement de pont selon l'une des revendications précédentes, dans lequel les éléments de suspension sont des câbles, comprenant des organes d'entraînement (50) de transfert de câble de suspension situés dans des portions creuses (111) de la structure du pont.

5. Un agencement de pont selon l'une des revendications précédentes, dans lequel les éléments de suspension sont des câbles, comprenant une vis de transfert d'entraînement (52) intégrée à des portions de structure de pont creuses et étant traversable par des coulisseaux couplés à des câbles de suspension (11) qui dépassent des extrémités de la structure de pont sur des poulies de transfert (128).

6. Un agencement de pont selon l'une des revendications précédentes, ayant un élément de structure de pont creux incorporant une vis d'entraînement et un suiveur de glissière télescopique de tubes formant glissière disposés au niveau de côtés opposés de la vis d'entraînement, un porteur de câble s'étendant au-dessus de celle-ci est agissant comme organe diamétral de contrainte pour empêcher la flexion de l'arbre de la vis d'entraînement.

7. Un agencement de pont selon l'une des revendications précédentes, dans lequel les éléments de suspension supplémentaires sont des éléments de sollicitation individuellement réglables, permettant le positionnement, la contention et le maintien latéral et longitudinal de la structure de pont.

8. Un agencement de pont selon l'une des revendications précédentes, dans lequel la structure de pont est suspendue sur des éléments de tension, tels que des liens, câbles, fils, cordes ou des chaînes, avec des moyens de réglage de tension, tels qu'un treuil à cliquet, pour la mise en oeuvre une tension respective propre.

9. Un agencement de pont selon l'une des revendications précédentes, comprenant des liens flexibles opposés de contrainte, tels que des chaînes, entre la structure de pont et les poteaux de support, réglables de manière sélective, relative et différentielle, pour un positionnement et un maintien (commandé).

10. Un agencement de pont selon l'une des revendications précédentes, configuré pour le transport de véhicules avec un bâti périmétrique formant squelette, surmonté par des plates-formes locales, formant le pont suspendu, telles que des rampes espacées pour l'appui local de roue, et le chargement ou déchargement par conduite des véhicules.

11. Un agencement de pont selon l'une des revendications précédentes, ayant des plates-formes ou plateaux de roue réglables sur une structure de transporteur formant plateau.

12. Un agencement de pont selon l'une des revendications précédentes, avec des ouvertures profilées en trou de serrure aménagées dans les poteaux de support pour recevoir une chaîne de contrainte insérée au travers d'eux, mais dont les maillons de chaîne sont auto-bloquants, une fois tournés et tirés dans une gorge étroite d'une ouverture.

13. Un agencement de pont selon l'une des revendications précédentes, équipé d'un treuil monté sur un poteau de support pour la tension d'une chaîne de contrainte.

14. Un agencement de pont selon l'une des revendications précédentes, comprenant une structure de pont démontable par rapport à des poteaux latéraux de support pour permettre le déplacement, le repositionnement de cette structure de pont ou son empilement sur des structures de pont identiques suspendues ou démontées, à l'intérieur ou au-delà des limites d'un récipient.

15. Un agencement de pont selon l'une des revendications précédentes, escamotable dans l'espace libre d'un récipient qui serait autrement superflu, par pleine élévation sur des poteaux latéraux de support afin d'être situé à la base d'un toit, en vue d'un rangement compact.

16. Un conteneur pour marchandises équipé d'unn agencement de pont selon l'une des revendications précédentes.

17. Un conteneur selon la revendication 16, avec des poteaux de support de pont ayant un profil trapézoïdal, engagés dans des cavités de profils complémentaires aménagées dans des profils de parois latérales de conteneur ayant une forme ondulée.
